# EUROPEAN PATENT SPECIFICATION

(11) **EP 0 382 981 B1**
(45) Date of publication and mention of the grant of the patent: **22.06.1994**
(21) Application number: 89313473.4
(22) Date of filing: 21.12.1989
(51) Int. Cl.: G01N 27/90

(54) **Transient electromagnetic method for detecting irregularities on conductive containers having variations in jacket thickness**
Elektromagnetisches Impulsverfahren zur Detektion von Unregelmässigkeiten an leitfähigen Behältern, deren Mantel eine nicht konstante Dicke hat
Méthode utilisant des impulsions électromagnétiques pour détecter des irrégularités sur des containers conducteurs ayant des variations dans l'épaisseur du revêtement

(30) Priority: 29.12.1988 US 292563
(43) Date of publication of application: 22.08.1990
(73) Proprietor: ATLANTIC RICHFIELD COMPANY, Los Angeles California 90071 (US)
(72) Inventor: Lara, Pedro F., Dallas Texas 75229 (US)
(74) Representative: Moir, Michael Christopher

(56) References cited:
- EP-A- 0 321 110
- DE-A- 2 734 429
- DE-A- 3 034 426
- DE-A- 3 342 417

## Description

### Field of the Invention

The present invention relates to a non-destructive method for detecting irregularities on electrically conductive containers such as pipelines, storage vessels, pressure vessels and the like that have variations in the thickness of a jacket, such as insulation, on said containers.

### Background of the Invention

Pipelines used to transport petroleum fluids such as crude oil and natural gas are commonly wrapped with a jacket of insulating material. For example, in Alaska and other cold climates, insulation is provided along pipelines to prevent the rapid cooling of oil and gas fluids, thus providing better transportability of these fluids. In refineries, pipelines transporting hot fluids are insulated in order to protect personnel from the high temperatures.

In insulated pipelines, the insulation retains moisture around the outside of the pipeline, which moisture promotes corrosion. Therefore, proper maintenance of insulated pipelines requires their periodic inspection for corrosion and other potential leak sources. However, the insulation, which serves as a thermal barrier, also serves as a barrier to inspection with many prior art inspection techniques. Removal of the insulation for inspection and rewrapping of insulation after inspection is both time consuming and expensive. The inspection process is complicated further on those pipelines covered with a metal jacket over the insulation. The metal jacket is used to keep out moisture. The metal jacket is typically provided in two half portions with each portion having flanges for aiding in the retention of the jacket on the pipeline. The two half portions of the jacket are joined together at the flanges which form seams. Water occasionally enters through the jacket seams and travels through the insulation to the pipe where it causes corrosion.

Prior art methods of detecting pipeline corrosion have proven inadequate. For example, pigs with corrosion detection equipment can only be used on pipelines that have access locations providing access to the interior of the pipelines; many pipelines lack such locations. Ultrasonic detection methods require removal of the metal jacket and insulation, a timely and expensive procedure. Radiography detection methods are potentially hazardous and the equipment is cumbersome, requiring impractical or inconvenient adjacent vehicular support. Furthermore, with radiography methods it is often difficult to distinguish between corrosion pits filled with corrosion products and uncorroded portions of pipe walls. What is needed then is a method of detecting corrosion through insulation and the surrounding jacket, and which method can be practiced with portable equipment.

Electromagnetic probing techniques provide such a method of detecting corrosion through insulation. In the prior art, frequency domain electromagnetic probing techniques are used to detect corrosion in aircraft fuel tanks. Frequency domain electromagnetic probing techniques utilize a small number of frequencies and measure magnitude and phase differentials between the transmitted signals and the received signals. However, because frequency domain techniques, as a practical matter, utilize only a small number of frequencies, the amount of information obtained is inherently limited, thus detracting from the accuracy of the techniques.

German Patent Specification No. DE 3034426 discloses a pulsed eddy current technique for non-destructive testing of electrically conductive materials. A pulse generator provides a current pulse to an excitor coil to induce eddy currents into an object. A measuring coil senses the resulting magnetic field. The signal is either sampled at a few discrete times or digitized with an analog-to-digital converter. Interpretation of the signal for defects involves looking to the time when the signal passes through zero for correlating to the depth of a defect.

German Patent Specification No. DE 2734429 discloses a detector located by a wall which is to be monitored. Both the detector and the wall are covered with a protective sheath. The detector can be an eddy current detector, wherein windings are placed around the pipe.

It has been discovered that corrosion of some insulated pipelines occurs in longitudinal bands along the bottom and side portions of the pipelines. Therefore, an antenna configuration that would take advantage of corrosion band geometry would be more effective in detecting corrosion. In the present invention, the receiving antenna is physically separate from the transmitting antenna to achieve better resolution. The tranmsitting antenna and the receiving antenna are positioned in a loop-loop arrangement or configuration.

The present invention discloses a method for detecting irregularities on the conductive walls of containers, utilizing physically separate transmitting and receiving antennas, wherein the distance between the antenna means and the wall varies across the area of the wall. On insulated containers, the distance between the antennas and the container wall will vary according to the insulation thickness, which thickness is typically non-uniform. Therefore, any method utilizing loop-loop antenna configurations must include steps for correcting for variations on distance between the antennas and the pipe wall.

### Summary of the Invention

It is an object of the present invention to provide a method for detecting irregularities such as corrosion on the walls of insulated containers, wherein the insulation has variations in thickness.

The present invention provides a A method for detecting irregularities on electrically conductive walls of container means, said walls being encased by insulation which may be of varying thickness, comprising the steps of providing transmitting antenna means and transmitter means connected with said transmitting antenna means; providing receiving antenna means and receiver means connected with said receiving antenna means; comprising:
a) placing said transmitting antenna means in proximity to that portion of the container means wall which is to be investigated with said insulation located between said container means wall and said transmitting antenna means; placing said receiving antenna means in proximity to the container means wall portion and in proximity to said transmitting antenna means, said receiving antenna means being separated from said transmitting antenna means;
b) inducing a transient eddy current into the container means wall portion with the transmitting antenna means;
c) receiving a signal indicative of said induced current in said container means wall portion with the receiving antenna means, said signal having a maximum, said maximum having an arrival time;
d) determining said maximum and its arrival time from said signal;
e) determining a thickness of said container means wall portion by comparing the maximum, and its arrival time, with the maxima of reference signals having similar arrival times, or with reference data indicative of such reference signals.

By separating the transmitting antenna means from the receiving antenna means so as to form a loop-loop configuration, the resolution of the method is improved, particularly where the irregularities which are being sought are bands of corrosion. Such corrosion bands are frequently found on insulated pipelines. The presence or absence of corrosion is inferred from the thickness of the wall.

With the loop-loop configuration, new methods of intepreting the received signals are required, especially to distinguish between the effects of wall thicknes and antenna distance from the container means wall on the received signal. I have discovered that for loop-loop configurations, the pipe wall thickness strongly affects the magnitude of the maximum, but only weakly affects the arrival time, or time of occurrence, of the maximum. Furthermore, the antenna distance from the container means wall strongly affects the arrival time of the maximum, but only weakly affects the magnitude of the maximum voltage.

To determine the presence or absence of irregularities, the received signal obtained from the investigated wall portion is examined and the maximum and the arrival time are determined. The maximum and the arrival time are compared to reference maximums and reference arrival times obtained from reference container means with known wall thicknesses.

### Brief Description of the Drawings

Fig. 1 is a schematic diagram showing a typical situation in which the method of the present invention, in accordance with a preferred embodiment, can be practiced, together with typical testing apparatus.

Fig. 2 is a graph showing the received signals obtained from a pipeline with the receiving antennas at different distances from the pipeline wall.

Fig. 3 is a graph showing the maximum voltages of plural received signals plotted with respect to the arrival time of the maximum voltages, there being shown scale lines superimposed thereon.

Fig. 4 is a graph showing the maximum voltages of plural received signals obtained from a linear portion of a pipeline having pits.

### Description of Preferred Embodiments

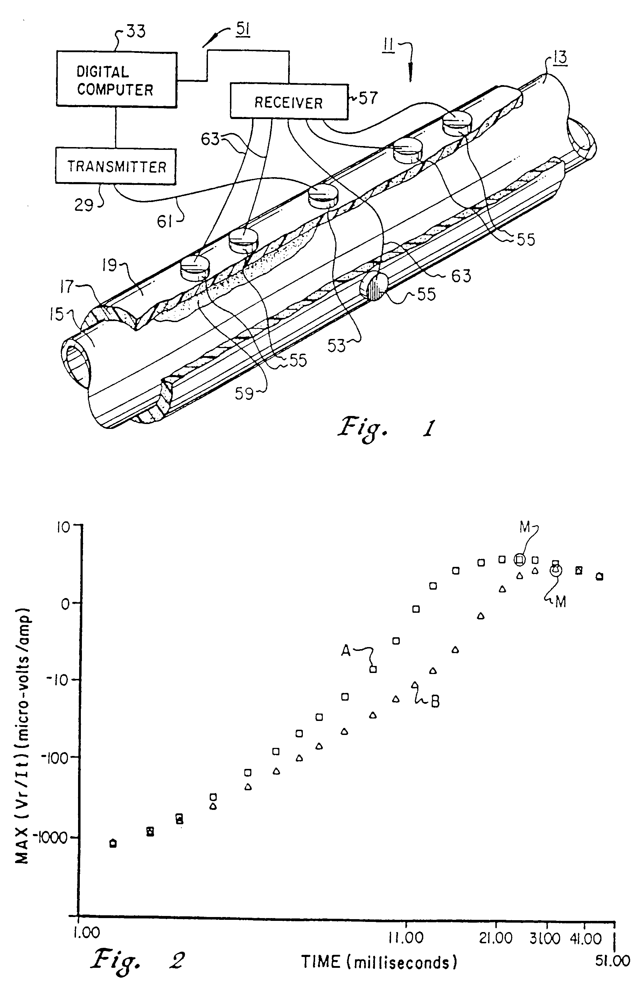

In Fig. 1, there is shown a schematic diagram showing a typical situation for practicing the method of the present invention, in accordance with a preferred embodiment. The method is used to detect irregularities, such as wall loss due to corrosion, in the conductive walls of containers. The corrosion can form on the inside or on the outside of the container.

The container shown in Fig. 1 is a portion of a pipeline 11. The pipeline is made up of a plurality of individual pipes 13. The pipes 13 each have a pipe wall 15 which made of an electrically conductive material such as steel. In the preferred embodiment, the pipeline is completely encased within an insulating material 17 and a metal jacket 19 that prevents direct access to the outside of the pipe wall 15 by the detecting apparatus 51. The jacket 19 has a thickness which is much less than the thickness of the pipe wall.

The detecting apparatus 51 includes transmitting antenna means 53, a transmitter 29, plural receiving antennas means 55, a receiver 57, and a digital computer 33.

The transmitting antenna includes an antenna 53 made up of plural turns of conductive wire wound around a core means. The core means is made of a non-magnetic and a non-conductive material such as plastic. The core means has a longitudinal axis; the conductive wire is wound circumferentially around the core means.

The transmitter 29 which is conventional, generates a train of pulses having magnitudes of 1 to 5 amps. A plurality of pulses are transmitted for each location of the antenna means for data enhancement purposes. The pulses have abrupt fall times on the order of 10 to 100 microseconds. The pulses of the transmitter pulse train alternate polarity to eliminate dc bias in the instrumentation. The duration of each pulse is sufficiently long to stabilize the pulse magnitude so that there are no induced currents in the pipe wall before the end of the pulse. The transmitter 29 repeats the pulses at a repetition rate that allows all of the necessary data to be obtained for each pulse. For example, a thick pipe wall requires more time to obtain data than does a thinner pipe wall because the induced current takes longer to diffuse in the thick pipe wall. Thus, the repetition rate of pulses will typically be slower for thick pipe walls than for thinner pipe walls. The transmitting antenna 53 is connected to the transmitter 29 by a pair of wires 61.

Each receiving antenna means includes an antenna 55 made up of plural turns of conductive wire wound onto a core means. The core means of the receiving antennas are similar to the transmitting antenna core means. Each receiving antenna 55 is connected to the receiver by a respective pair of wires 63. The receiver 57 has provision for multiple channels. Each channel is connected to a single receiving antenna 55. Each receiver channel has an amplifier which is connected to an analog-to-digital converter. Each receiver channel is broad band with a wide (5 or 6 orders of magnitude) dynamic range.

The transmitter 29 and the receiver 57 are connected to the computer 33 which controls the pulse frequency of the transmitter and serves to record the data from the receiver channels. The computer 33 also provides an interface for an operator, which allows the operator to control the parameters of data acquisition (for example, transmitter pulse frequency, transmitter pulse magnitude) and the like.

The method of the present invention will now be described. First, the transmitting antenna 53 is placed on the pipeline jacket 19 so as to be in proximity with that portion of the pipe wall which is to be investigated.

The individual receiving antennas 55 are placed on the metal jacket 19, so as to be in proximity to the pipe wall 15. It has been discovered that on many of the insulated pipelines in cold climates corrosion 59 forms in bands that extend longitudinally. The bands of corrosion are typically found along the bottom and side portions of pipelines 11, presumably because the insulation 17 allows water to accumulate along those portions. (In Fig. 1, the band of corrosion 59 is shown on the top portion of the pipeline 11 for illustrative purposes.) The banded configurations of the corrosion 59 can be taken advantage of by separating the transmitting and receiving antennas 53, 55 so as to form loop-loop configurations or arrangements. Loop-loop antenna configurations can be made to have greater spatial resolution than a coincident loop antenna configuration, where the transmitting and receiving antennas are wound onto the same core means. This is because the receiving antenna in a loop-loop antenna configuration observes only a portion of the induced eddy currents diffusing in the pipe wall, whereas the receiving antenna in a coincident loop antenna configuration observes the entire induced eddy currents diffusing away from the transmitting antenna. The receiving antennas 55 are placed longitudinally and circumferentially from the transmitting antenna 29. Thus, in Fig. 1, there are first and second receiving antennas positioned on one side of and longitudinally of the transmitting antenna; third and fourth receiving antennas positioned on the other side of and longitudinally of the transmitting antenna, a fifth receiving antenna positioned circumferentially of the transmitting antenna, at about 90 degrees; and a sixth receiving antenna (not shown) positioned circumferentially of the transmitting antenna, at about 180 degrees from the fifth receiving antenna. Plural receiving antennas are used to increase data acquisition rates and to improve spatial resolution.

After the detecting apparatus 51 is setup, the transmitting antenna 53 is provided with an abruptly changing current so as to induce current into the pipe wall 15. In the preferred embodiment, current is induced into the pipe wall as follows; the transmitting antenna 53 is energized with 1-5 amps by the transmitter 29 for a period of time. As described above, the transmitting antenna is energized for a sufficient period of time such that the magnitude of the current in the transmitting antenna is stabilized to ensure no inadvertent eddy currents are induced into the pipe wall. Then, the transmitting antenna 53 is abruptly deenergized by the transmitter 29 by having the magnitude of the current fall rapidly to zero. This abrupt change in the transmitting antenna current induces eddy currents into the pipe wall 15.

As soon as the transmitting antenna is deenergized, the receiver 57 is turned on and all receiving channels are measured simultaneously. The individual receiving antennas 55 detect the presence of and the decay of the induced current and generate respective received signals on the respective receiving antenna channels.

The received signals are amplified and filtered. The received signals are then digitized and stored in the computer 33 for processing.

The transmitting and receiving procedure is repeated many times with the antennas located in the same position, in order to allow stacking of the received signals to increase the signal-to-noise ratio.

The received signals are processed to reduce noise and to aid in the interpretation of the signals.

The received signals obtained from loop-loop antenna configurations are different from the received signals obtained from coincident antenna configurations. In the coincident loop arrangement or configuration, the induced eddy currents diffuse outwardly away from the receiving antenna. The received signals from a coincident loop arrangement begin at some maximum voltage and then decay to smaller voltages until the signal becomes indistinguishable from noise.

Referring to Fig. 2, each received signal A, B, obtained from a loop-loop arrangement, begins at some negative voltage and becomes more positive over a period of time. Each received signal typically changes sign at some time by crossing over zero volts. After changing signs, the respective received signal reaches a respective maximum M before decaying into noise. The maximum M occurs in the intermediate or late time ranges. The maximum M is distinguished from the initial maximum that occurs at early times, right after the receiver is turned on. The respective time that the respective maximum M occurs is referred to herein as the arrival time.

It is believed that the received signals from a loop-loop arrangement behave in this manner because of the diffusion of the eddy currents in the pipe wall. The eddy currents, which can be analogized to a wave, diffuse away from the transmitting antenna 53. As the eddy current wave approaches the receiving antenna, from the transmitting antenna, the received signal increases. The received signal reaches its maximum when the eddy current wave is underneath the receiving antenna. As the eddy current wave passes the receiving antenna, the received signal decreases, until it becomes indistinguishable from noise.

The loop-loop arrangement of antennas calls for new methods for interpreting the data in order to be useful in detecting the presence of corrosion. In particular, it is necessary to be able to distinguish between the effects on the received signals that are caused by the thickness of the pipe wall and the effects that are caused by the distance between the antennas and the pipe wall (hereinafter referred to as antenna distance). This is especially true for insulated containers, where variations in insulation thickness result in variations in antenna distance.

In determining the presence or absence of corrosion, the thickness of the pipe wall is determined. If the pipe wall is electrically thinner than it should be, the presence of corrosion is inferred. If the pipe wall is electrically normal in thickness, the absence of corrosion is inferred.

The antenna distance is determined by the thickness of the insulation, because the antennas are placed on the outside of the insulation. The thickness of the insulation varies from location to location on the pipeline, thus causing the antenna distance to vary from location to location.

I have discovered that, for loop-loop antenna configurations, pipe wall thickness strongly affects the magnitude of the maximum of the received signal, but only weakly affects the arrival time of the maximum. The thinner the pipe wall, the larger the maximum; conversely the thicker the pipe wall, the smaller the maximum. The arrival time for thin pipe walls is slightly earlier than for thicker pipe walls. Eddy currents diffuse faster in thinner walls because of the larger gradients present in the thinner walls. Furthermore, it has been discovered that the distance between the antennas and the pipe wall strongly affects the arrival time of the maximum, but only weakly affects the magnitude of the maximum. This is illustrated in Fig. 2, where received signals A and B were obtained over the same pipe wall portions so that the pipe wall thickness for received signals A and B is the same. Received signal A was obtained with an antenna distance greater than the antenna distance of received signal B. The arrival time of the maximum of received signal A is earlier than the arrival time of the maximum of received signal B. However, the maximums of received signals A and B are similar. Heretofore, it was believed that antenna distance strongly affects the magnitude of the maximum of the received signal.

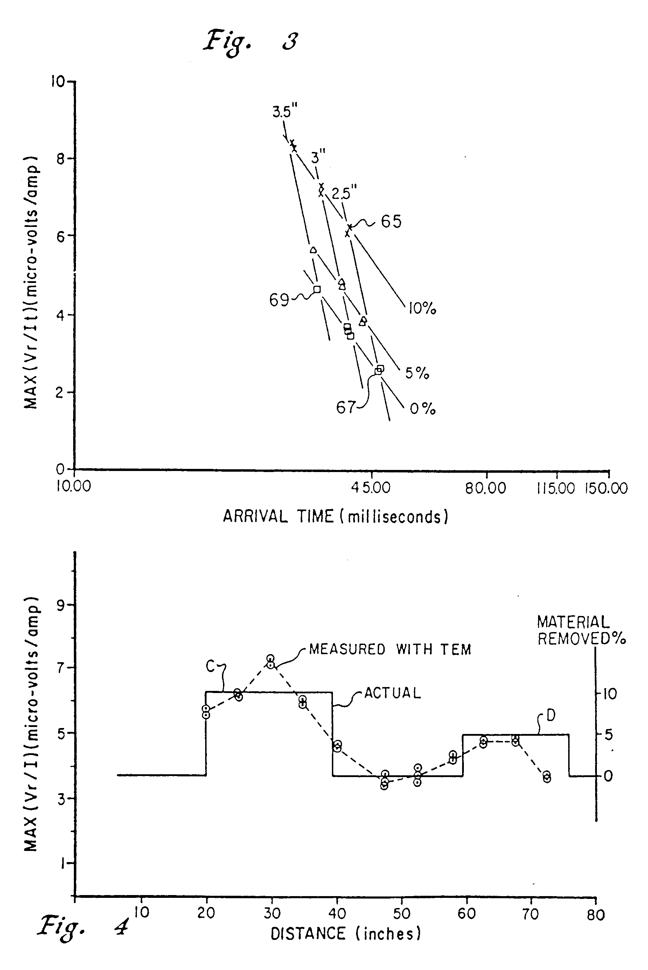

By examining the received signals to determine the maximums and the arrival times of those received signals, an indication of the presence or absence of irregularities such as corrosion can be obtained. The actual maximum of a received signal is determined by using quadratic interpolation of the data points located nearest to the supposed maximum. In Fig. 4, there is shown a graph of maximums of received signals which were obtained from a linear section of pipe with a constant antenna distance. The pipe (the profile of which is represented by the unbroken line) has been manually worked to create pits C and D with 10% metal loss and 5% metal loss respectively. The maximum voltages (connected by dashed lines) form a measured profile that approximates the actual profile. In the center of the pits, the maximum voltages are greater than are the maximum voltages obtained from unpitted portions of the wall. Also, the maximum voltage in the center of the 10% wall loss pit C is greater than the maximum voltage in the center of the 5% wall loss pit D.

Because the distance between the antennas and the pipe wall has a slight affect on the maximums of the received signals, merely looking at maximums alone makes measurements of pipe wall thickness difficult. To permit accurate quantitative measurements of wall thickness, the affects on the maximums caused by the variations in distance between the antennas and the pipe wall should be distinguishable from the affects on the maximums caused by the wall thickness. To separate the parameter of wall thickness from the parameter of antenna distance, the maximum voltages are examined relative to the respective arrival times. Referring to Fig. 3, the maximum voltages are plotted with respect to the respective arrival times for a pipeline. A scale has been constructed on the graph, which scale is shown as respective lines of invariance for wall thickness (represented as percent wall loss) and for antenna distance. Thus, there are scale lines for constant wall loss and scale lines for constant antenna distances. For a constant antenna distance, changes in pipe wall thickness strongly affects the maximum voltage of the received signal and only weakly affects the arrival time. For a constant pipe wall thickness, changes in antenna distance strongly affects the arrival time and weakly affects the maximum voltage of the received signal.

By acquiring data in the form of received signals from a pipe having known parameters, and particularly known wall thicknesses and antenna distances, a calibrated reference scale can be constructed for that type of pipe. To construct a calibrated reference scale, at least three reference received signals 65, 67, 69 must be obtained from a reference pipeline (see Fig. 3). Two of these reference signals 67, 69 are obtained from the same pipe wall thickness; the other reference signal 65 is obtained from a different pipe wall thickness. Two of the reference signals 65, 67 are obtained with the same antenna distance; the other reference signal 69 is obtained with a different antenna distance. The three reference signals allow the construction of the lines of invariance, from which other points can be extrapolated. Data from similar type of pipes can be compared to the reference scale so that the wall thickness can be determined. Linear interpolation can he used to quantitatively determine the wall thickness.

Qualitative measurements of wall thickness can be made by determining the maximum and arrival time of the received signal obtained from the investigated pipe wall portion and comparing the maximum and the arrival time to the maximums and arrival times of other received signals obtained from other portions of the pipe wall. The maximums of the other received signals which have an arrival time similar to the arrival time of the maximum of the investigated received signal are selected. The maximum of the investigated received signal is then compared to the selected maximums to obtain an indication of wall thickness relative to other areas of the pipe wall. The variations in antenna distance over the areal extent of measurements are reduced by comparing those maximums which have similar arrival times.

Although this invention has been described with a certain degree of particularity, it is understood that the present disclosure is made only by way of example and that numerous changes in the details of construction and the combination and arrangement of parts may be resorted to without departing from the scope of the invention as claimed.

## Claims

1. A method for detecting irregularities on electrically conductive walls (15) of container means, said walls being encased by insulation which may be of varying thickness, comprising the steps of providing transmitting antenna means (53) and transmitter means (29) connected with said transmitting antenna means; providing receiving antenna means (55) and receiver means (57) connected with said receiving antenna means; comprising:
a) placing said transmitting antenna means in proximity to that portion of the container means wall which is to be investigated with said insulation located between said container means wall and said transmitting antenna means; placing said receiving antenna means in proximity to the container means wall portion and in proximity to said transmitting antenna means, said receiving antenna means being separated from said transmitting antenna means;
b) inducing a transient eddy current into the container means wall portion with the transmitting antenna means;
c) receiving a signal indicative of said induced current in said container means wall portion with the receiving antenna means, said signal having a maximum, said maximum having an arrival time;
d) determining said maximum and its arrival time from said signal;
e) determining a thickness of said container means wall portion by comparing the maximum, and its arrival time, with the maxima of reference signals having similar arrival times, or with reference data indicative of such reference signals.

2. The method of claim 1 wherein said reference signals are obtained from other portions of the container means wall.

3. The method of claim 1 wherein said reference signals are obtained from reference container means with known wall thicknesses using transmitting antenna means and receiving antenna means positioned at known distances from said reference container means.

4. The method of claims 1, 2 or 3, wherein said maximum occurs after said received signal changes sign.

5. The method of any one of the preceding claims, wherein said irregularities typically occur in bands, said bands lying in a supposed direction, said receiving antenna means (55) being placed relative to said transmitting antenna means (53) so that an imaginary line extending through said receiving and transmitting antenna means is parallel to the supposed direction of said bands.

6. The method of any one of the preceding claims, wherein plural receiving antenna means (55) are provided and placed in proximity to said transmitting antenna means (53).

7. The method of any one of the preceding claims wherein the maximum and arrival time of the received signal is compared to the maxima and arrival times of reference signals having similar arrival times.

## Patentansprüche

1. Verfahren zur Feststellung von Unregelmäßigkeiten auf elektrisch leitenden Wänden (15) von Behältermitteln, wobei besagte Wände mit Isolierung umhüllt sind, die in der Dicke variieren kann, das die Schritte aufweist, sendende Antennenmittel (53) und Sendemittel (29), die mit besagten sendenden Antennenmitteln verbunden sind, zur Verfügung zu stellen; empfangende Antennenmittel (55) und Empfängermittel (57), die mitt besagten empfangenden Antennenmitteln verbunden sind, zur Verfügung zu stellen; und das folgendes aufweist:
a) die Plazierung besagter Antennenmittel in der Nähe desjenigen Abschnitts der Behältervorrichtungswand, der untersucht werden soll, wobei sich die besagte Isolation zwischen der besagten Behältervorrichtungswand und den besagten sendenden Antennenmitteln befindet; der Plazierung der besagten Empfangsantennenmittel in der Nähe des Behältervorrichtungswandabschnittes und in der Nähe zu den besagten sendenden Antennenmitteln, wobei besagte empfangende Antennenmittel von den besagten sendenden Antennenmitteln getrennt sind;
b) das Induzieren eines transienten Wirbelstroms in dem Behältervorrichtungswandabschnitt durch die sendenden Antennenmittel;
c) das Empfangen eines Signals, das den in dem besagten Behältervorrichtungswandabschnitt induzierten Strom anzeigt, mit den empfangenden Antennenmitteln, wobei das besagte Signal ein Maximum hat und das besagte Maximum eine Ankunfts- bzw. Eintreffzeit hat;
d) die Bestimmung besagten Maximums und seiner Ankunftszeit aus dem besagten Signal;
e) die Bestimmung einer Dicke des besagten Behältervorrichtungswandabschnittes durch einen Vergleich des Maximums und seiner Ankunftszeit, mit den Maxima von Referenzsignalen, die ähnliche Ankunftszeiten haben oder mit Referenzdaten, die derartige Referenzsignale anzeigen.

2. Verfahren nach Anspruch 1, bei dem die besagten Referenzsignale von anderen Abschnitten der Behältervorrichtungswand erhalten wurden.

3. Verfahren nach Anspruch 1, bei der besagte Referenzsignale von Referenzbehältervorrichtungen mit bekannten Wanddicken erhalten wurden, wobei sendende Antennenmittel und empfangende Antennenmittel verwendet werden, die in bekannten Abständen von der besagten Referenzbehältervorrichtung positioniert sind.

4. Verfahren gemäß den Ansprüchen 1, 2 oder 3, bei dem das besagte Maximum auftritt, nachdem das besagte Empfangssignal das Vorzeichen gewechselt hat.

5. Verfahren nach irgendeinem der vorhergehenden Ansprüche, bei dem besagte Unregelmäßigkeiten typischerweist in Bändern bzw. Streifen auftreten, wobei besagte Bänder bzw. Streifen in einer angenommenen Richtung liegen, wobei besagte empfangene Antennenmittel (55) relativ zu besagten sendenden Antennenmitteln (53) plaziert werden, so daß eine gedachte Linie, die sich durch besagte empfangende und sendende Antennenmittel erstreckt, parallel zu der angenommenen Richtung der besagten Bänder bzw. Streifen ist.

6. Verfahren nach irgendeinem der vorhergehenden Ansprüche, bei dem viele empfangende Antennenmittel (55) zur Verfügung gestellt werden und in der Nähe zu besagten sendenden Antennenmitteln (53) plaziert werden.

7. Verfahren nach irgendeinem der vorhergehenden Ansprüche, bei dem das Maximum der Ankunftszeit des Empfangssignals mit den Maxima und Ankunftszeiten von Referenzsignalen, die ähnliche Ankunftszeiten haben, verglichen wird.

## Revendications

1. Méthode de détection des irrégularités de parois électriquement conductrices (15) de moyens de contenance, lesdites parois étant entourées d'une isolation qui peut être d'épaisseur variable, cette méthode comprenant les étapes d'installation d'une antenne d'émission (53) et de moyens d'émission (29) connectés à la dite antenne d'émission, et d'installation d'un dispositif d'antenne de réception (55) et de moyens de réception (57) connectés audit dispositif d'antenne de réception ;
ladite méthode comprenant :
(a) l'installation de ladite antenne d'émission à proximité de la partie de la paroi des moyens de cotenance qu'on veut examiner, ladite isolation étant située entre ladite paroi des moyens de contenance et la dite antenne d'émission, et l'installation dudit dispositif d'antenne de réception à proximité de la partie de paroi des moyens de contenance et à proximité de ladite antenne d'émission, ledit dispositif d'antenne de réception étant séparé de ladite antenne d'émission ;
(b) l'induction d'un courant induit transitoire dans la partie de paroi des moyens de contenance, par l'intermédiaire de l'antenne d'émission ;
(c) la réception d'un signal indicatif dudit courant induit dans ladite partie de paroi des moyens de contenance, avec le dispositif d'antenne de réception, ledit signal ayant une valeur maximale et cette valeur maximale ayant un instant d'arrivée ou d'apparition ;
(d) la détermination de ladite valeur maximale et de son instant d'arrivée, à partir dudit signal ;
(e) la détermination d'une épaisseur de ladite partie de paroi des moyens de contenance par comparaison de la valeur maximale et de son instant d'arrivée avec les valeurs maximales de signaux de référence ayant des instants d'arrivée semblables, ou avec des données de référence indicatives de tels signaux de référence.

2. Méthode suivant la revendication 1, dans laquelle lesdits signaux de référence sont obtenus en provenance d'autres parties de la paroi des moyens de contenance.

3. Méthode suivant la revendication 1, dans laquelle lesdits signaux de référence sont obtenus à partir de moyens de contenance de référence ayant des épaisseurs de paroi connues,au moyen d'une antenne d'émission et d'un dispositif d'antenne de réception placés à des distances connues desdits moyens de contenance de référence.

4. Méthode suivant la revendication 1,2 ou 3, dans laquelle ladite valeur maximale se produit après changement de signe dudit signal reçu.

5. Méthode suivant une quelconque des revendications précédentes, dans laquelle lesdites irrégularités se produisent typiquement en bandes, lesdites bandes étant placées dans une direction supposée, ledit dispositif d'antenne de réception (55) étant placé par rapport à ladite antenne d'émission (53) de sorte qu'une ligne imaginaire passant par ledit dispositif d'antenne de réception et ladite antenne d'émission soit parallèle à la direction supposée desdites bandes.

6. Méthode suivant une quelconque des revendications précédentes, dans laquelle plusieurs antennes de réception (55) sont prévues et placées à proximité de ladite antenne d'émission (53).

7. Méthode suivant une quelconque des revendications précédentes, dans laquelle la valeur maximale et l'instant d'arrivée du signal reçu sont comparés aux valeurs maximales et aux instants d'arrivée de signaux de référence ayant des instants d'arrivée similaires.
